# FASCICULE DE BREVET EUROPEEN

(11) **EP 4 532 913 B1**
(45) Date de publication et mention de la délivrance du brevet: **15.07.2026**
(21) Numéro de dépôt: 23730171.8
(22) Date de dépôt: 19.05.2023
(51) Int. Cl.: F02C 7/14, F28D 21/00, F28F 9/02, F28D 9/00, F02C 7/08

(54) **DISPOSITIF D'ÉCHANGEUR DE CHALEUR AMÉLIORÉ POUR TURBOMACHINE D'AÉRONEF**
VERBESSERTE WÄRMETAUSCHERVORRICHTUNG FÜR EINE FLUGZEUGTURBOMASCHINE
IMPROVED HEAT EXCHANGER DEVICE FOR AN AIRCRAFT TURBOMACHINE

(30) Priorité: 24.05.2022 FR 2204956
(43) Date de publication de la demande: 09.04.2025
(73) Titulaire: SAFRAN, 75015 Paris (FR)
(72) Inventeur: MAALOUF, Samer, 77550 Moissy-Cramayel (FR); TOUBIANA, Ephraïm, 77550 Moissy-Cramayel (FR)
(74) Mandataire: Cabinet Beau de Loménie
(86) Numéro de dépôt international: PCT/FR2023/050720
(87) Numéro de publication internationale: WO 2023/227842

(56) Documents cités:
- EP-A1- 3 531 057
- DE-A1- 102005 022 389
- US-A1- 2021 262 385

## Description

### Domaine Technique

Le présent exposé concerne un dispositif d'échangeur thermique pour turbomachine d'aéronef, notamment un turbopropulseur ou un turboréacteur par exemple. Le présent exposé concerne également une turbomachine comprenant un tel dispositif d'échangeur thermique.

### Technique antérieure

Les échangeurs thermiques, ou échangeurs de chaleur, sont utilisés dans les turbomachines d'aéronef pour répondre à différents besoins, par exemple des échangeurs air/gaz chauds récupérant des gaz chauds en sortie tuyère pour chauffer l'air en entrée de la chambre de combustion, des échangeurs dits « intercooler » air/air pour refroidir l'air chaud inter-compresseur par de l'air ambiant, des échangeurs tuyère pour le réchauffage du carburant cryogénique, ou des échangeurs pour le refroidissement par de l'air ambiant de l'air prélevé inter-compresseur et destiné à être acheminé vers le système de conditionnement cabine.

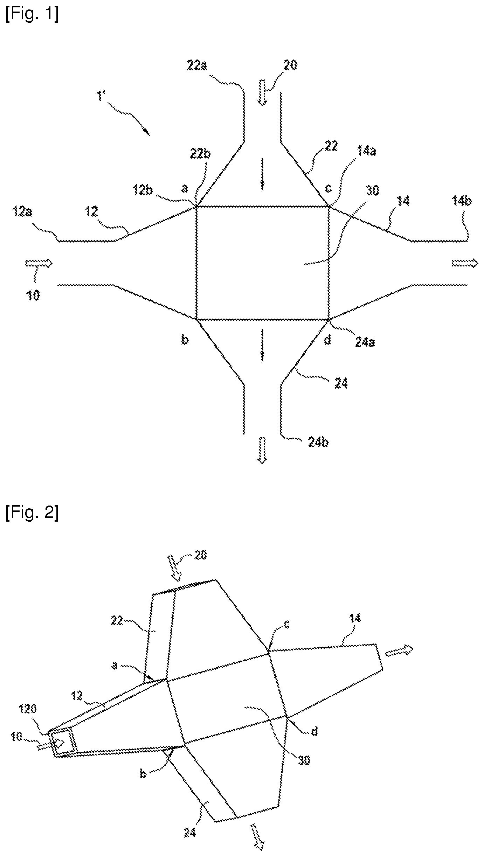

La figure 1 représente schématiquement une vue de face et en coupe d'un dispositif d'échangeur de chaleur 1' selon l'art antérieur, de type à courants croisés, comprenant un premier courant 10 dit « courant chaud », et un deuxième courant 20 dit « courant froid ». En effet, de manière connue, les échangeurs de chaleur utilisés pour les applications ci-dessus font intervenir un fluide chaud à haute température, généralement un fluide compressible à l'état gazeux ayant une température variant entre 400°C et 1000°C, et un fluide froid à température plus basse, généralement compris entre -150°C à 400°C.

Typiquement, les échangeurs de chaleur comprennent des collecteurs en entrée et/ou en sortie d'un corps d'échangeur 30, permettant d'assurer la distribution des fluides chaud et froid en entrée et/ou en sortie du corps d'échangeur. Ainsi, le courant chaud 10 comprend, d'amont en aval (selon le sens d'écoulement du fluide chaud), un collecteur amont de fluide chaud 12, des canaux du corps d'échangeur 30, et un collecteur aval de fluide chaud 14. Le collecteur amont de fluide chaud 12 est configuré pour collecter un premier fluide, dit « fluide chaud » dans une portion distincte de la turbomachine (non représentée). Par exemple, le collecteur amont de fluide chaud 12 peut prélever les gaz chauds en sortie de la turbine basse pression et les acheminer jusque dans le corps d'échangeur 30, dans lequel circule également le fluide froid.

On comprend ainsi que le collecteur amont de fluide chaud 12 s'étend entre une première extrémité amont 12a permettant de collecter le fluide chaud à haute température, et une deuxième extrémité aval 12b fixée au corps d'échangeur 30, par laquelle le fluide chaud est injecté dans le ou les canaux du corps d'échangeur 30. Le collecteur aval de fluide chaud 14 s'étend également entre une première extrémité amont 14a fixée au corps d'échangeur 30 et par laquelle est récupéré le fluide chaud ayant circulé dans le corps d'échangeur 30, et une extrémité aval 14b communiquant avec une portion distincte (non représentée) de la turbomachine.

De même, le courant froid 20 comprend, d'amont en aval (selon le sens d'écoulement du fluide froid), un collecteur amont de fluide froid 22, des canaux du corps d'échangeur 30, et un collecteur aval de fluide froid 24. Le collecteur amont de fluide froid 22 est configuré pour collecter un deuxième fluide, dit « fluide froid » dans une portion distincte de la turbomachine (non représentée), par exemple dans la veine d'écoulement d'air secondaire.

On comprend ainsi que le collecteur amont de fluide froid 22 s'étend entre une première extrémité amont 22a permettant de collecter le fluide froid à basse température, et une deuxième extrémité aval 22b fixée au corps d'échangeur 30, par laquelle le fluide froid est injecté dans le ou les canaux du corps d'échangeur 30. Le collecteur aval de fluide froid 24 s'étend également entre une première extrémité amont 24a fixée au corps d'échangeur 30 et par laquelle est récupéré le fluide froid ayant circulé dans le corps d'échangeur 30, et une extrémité aval 24b communiquant avec une portion distincte (non représentée) de la turbomachine.

Le corps d'échangeur 30 (ou noyau d'échangeur) est la pièce dans laquelle les échanges de chaleur proprement dits ont lieu entre le fluide chaud et le fluide froid. On comprend donc que le corps d'échangeur 30 comprend un ou plusieurs canaux dans lesquels circule le fluide chaud, et un ou plusieurs canaux dans lesquels circule le fluide froid, les transferts de chaleur entre ces deux fluides ayant lieu au travers des parois de ces différents canaux. Dans le cas d'un échangeur à courants croisés, les canaux dans lesquels circule le fluide froid sont perpendiculaires aux canaux dans lesquels circule le fluide chaud, ces différents canaux pouvant être superposés les uns aux autres.

DE 10 2005 022389 A1 et EP 3 531 057 A1 décrivent d'autres exemples d'échangeurs de chaleur selon le préambule de la revendication 1.

Toutefois, ces échangeurs sont soumis à des sollicitations thermiques importantes. Une dilatation/contraction thermique du corps (ou noyau) de l'échangeur 30 et des collecteurs se produit à chaque cycle moteur, avec des transitoires thermiques importants liés notamment aux démarrages et aux arrêts du moteur. Ces sollicitations entrainent notamment des contraintes importantes au niveau des jonctions entre les collecteurs 12, 14, 22, 24 et le corps d'échangeur 30. Dans le cas de l'échangeur à courants croisés 1' en particulier, quatre zones de jonctions a, b, c, d existent entre les extrémités aval 12b, 22b du collecteur amont de fluide chaud et froid 12, 22 et le corps d'échangeur 30, et entre les extrémités amont 14a, 24a du collecteur aval de fluide chaud et froid 14, 24 et le corps d'échangeur 30. Dans le cas d'échangeurs à collecteurs de section rectangulaire, ces zones de jonctions entre les extrémités des collecteurs et le corps d'échangeur sont des lignes droites de contact.

Ces contraintes peuvent conduire, par la répétition des cycles thermiques, à la formation de fissures dans l'ensemble corps d'échangeur/collecteurs, en particulier dans les zones de jonction a, b, c, d. Ces fissures dites de fatigue thermique peuvent elles-mêmes entrainer des fuites et conduire à une fracture de l'ensemble, ce qui réduit considérablement la durée de vie de l'échangeur. Les caractéristiques mécaniques des parois des collecteurs peuvent également être endommagées lorsque la température du fluide chaud circulant dans le collecteur est supérieure à la température admissible de la paroi (par exemple 100 K pour une paroi en inox, ou 500 K pour une paroi en aluminium).

On notera à l'inverse que les parois du corps d'échangeur 30 sont moins impactées. En effet, les échanges thermiques entre le fluide chaud et le fluide froid ayant lieux principalement dans le corps d'échangeur 30, la température des parois dans le corps de l'échangeur se situe entre celle du fluide chaud et celle du fluide froid.

Une solution connue consiste à rajouter aux collecteurs des portions flexibles ou des soufflets permettant l'extension et la rétractation de l'ensemble collecteur/corps d'échangeur. Cela permet de réduire les sollicitations sur les supports de l'ensemble, et par conséquent de réduire le risque de déformation de l'échangeur. Cependant, ce type de dispositif est difficile à mettre en œuvre en termes d'opérabilité et de maintenance, présente un coût élevé, et ne répond pas de manière satisfaisante à la problématique mentionnée ci-dessus liée à l'apparition de fissures, en particulier dans les zones de jonctions entre les collecteurs et le corps d'échangeur.

Il existe donc un besoin pour un dispositif d'échangeur de chaleur permettant de limiter, voire supprimer les problématiques liées d'une part à la fatigue thermique, et d'autre part à la tenue mécanique des collecteurs.

### Exposé de l'invention

Le présent exposé concerne un dispositif d'échangeur de chaleur pour turbomachine d'aéronef, le dispositif d'échangeur de chaleur tel que défini dans la revendication 1 comprenant un corps d'échangeur, un collecteur amont de fluide chaud fixé au corps d'échangeur et configuré pour collecter un premier fluide à une première température et pour l'amener vers le corps d'échangeur, un collecteur amont de fluide froid fixé au corps d'échangeur et configuré pour collecter un deuxième fluide à une deuxième température inférieure à la première température et pour l'amener vers le corps d'échangeur, le collecteur amont de fluide chaud au moins comprenant une double paroi formant une cavité périphérique entourant une cavité principale configurée pour recevoir un écoulement principale du premier fluide, la cavité périphérique étant configurée pour recevoir un écoulement secondaire du premier fluide ou du deuxième fluide.

Dans le présent exposé, les termes « amont » et « aval » sont définis par rapport au sens d'écoulement des fluides dans les différents courants du dispositif d'échangeur de chaleur, c'est-à-dire les courants « chaud » et « froid ». Plus précisément, le premier fluide s'écoule dans le dispositif d'échangeur de chaleur selon son sens d'écoulement, de l'amont vers l'aval, dans le collecteur amont de fluide chaud dans un premier temps, puis dans le corps d'échangeur, et enfin dans le collecteur aval de fluide chaud défini ultérieurement. De la même façon, le deuxième fluide s'écoule, de l'amont vers l'aval, dans le collecteur amont de fluide froid dans un premier temps, puis dans le corps d'échangeur, et enfin dans le collecteur aval de fluide froid défini ultérieurement.

Dans le présent exposé, on comprend que la double paroi du collecteur amont de fluide chaud comprend deux parois relativement proches l'une de l'autre, sans être en contact l'une avec l'autre. L'espacement ainsi formé entre les deux parois de cette double paroi forme une cavité périphérique entourant la cavité principale. On notera que la cavité principale permet d'acheminer le premier fluide collecté dans la turbomachine jusqu'au corps d'échangeur, par l'intermédiaire d'un écoulement principal.

Par ailleurs, une fraction du premier fluide ou du deuxième fluide peut s'écouler dans la cavité périphérique, cette fraction formant un écoulement secondaire en périphérie de l'écoulement principal. Par conséquent, le premier fluide à haute température s'écoulant dans la cavité principale n'est pas séparé de l'extérieur du collecteur, à température ambiante, par une simple paroi, mais par une double paroi, par la cavité périphérique et par l'écoulement secondaire dans cette cavité périphérique.

Cette configuration permet de diminuer les transferts de chaleur en répartissant ces derniers dans les deux parois du collecteur et dans l'écoulement secondaire, et de limiter ainsi le risque d'apparition de fissures dans ces parois, notamment au niveau de la jonction entre le collecteur amont de fluide chaud et le corps d'échangeur.

Dans certains modes de réalisation, le dispositif comprend un collecteur aval de fluide froid fixé au corps d'échangeur et configuré pour collecter le deuxième fluide provenant du corps d'échangeur, le collecteur amont de fluide chaud étant configuré pour prélever une fraction du deuxième fluide s'écoulant dans le collecteur amont de fluide froid, et pour amener ladite fraction vers le collecteur aval de fluide froid par l'intermédiaire de la cavité périphérique.

Selon cette configuration, alors que la majeure partie du deuxième fluide s'écoule, d'amont en aval, dans le collecteur amont de fluide froid, dans le corps d'échangeur, puis dans le collecteur aval de fluide froid, une fraction plus faible du deuxième fluide ne s'écoule pas dans le corps d'échangeur, mais est déviée vers le collecteur amont de fluide chaud, plus précisément dans la cavité périphérique formée par la double paroi dudit collecteur amont de fluide chaud. Après s'être écoulée dans la cavité périphérique, cette fraction du deuxième fluide est ensuite réinjectée dans le collecteur aval de fluide froid, en aval du corps d'échangeur.

Cet écoulement du deuxième fluide, plus froid que le premier fluide, dans la cavité périphérique, permet ainsi de refroidir localement la paroi située du côté du premier fluide, en particulier au niveau des jonctions entre le collecteur et le corps d'échangeur, ces jonctions étant particulièrement sollicitées thermiquement. Par conséquent, durant le fonctionnement de la turbomachine, le collecteur amont de fluide chaud subit des variations de température moins élevées, ce qui permet de réduire, voire supprimer la formation de fissure, mais également d'améliorer sa tenue mécanique. Ainsi, la double paroi agit elle-même comme un échangeur de chaleur, permettant de réchauffer cette fraction du deuxième fluide tout en en refroidissant la paroi du collecteur amont de fluide chaud.

Dans certains modes de réalisation, la cavité périphérique comprend au moins une section d'entrée débouchant dans une cavité principale du collecteur amont de fluide froid, la section d'entrée étant configurée pour prélever la fraction du deuxième fluide et étant disposée à une première jonction entre le collecteur amont de fluide froid, le collecteur amont de fluide chaud et le corps d'échangeur.

On comprend que la section d'entrée peut être une ouverture formée dans la jonction entre le collecteur amont de fluide froid, le collecteur amont de fluide chaud et le corps d'échangeur, permettant de mettre en communication fluidique la cavité principale du collecteur amont de fluide froid avec la cavité périphérique du collecteur amont de fluide chaud. Ainsi, en fonction des dimensions de la section d'entrée, une petite fraction du deuxième fluide s'écoulant dans le collecteur amont de fluide froid peut pénétrer dans la cavité périphérique du collecteur amont de fluide chaud, par l'intermédiaire de cette section d'entrée. Le fait de disposer la section d'entrée au niveau de cette jonction permet d'augmenter les échanges de chaleur entre le deuxième fluide et la paroi du collecteur amont de fluide chaud à cet endroit, et ainsi de limiter le risque de fissures à cette jonction.

Dans certains modes de réalisation, la cavité périphérique comprend au moins une section de sortie débouchant dans une cavité principale du collecteur aval de fluide froid, la section de sortie étant configurée pour injecter dans le collecteur aval de fluide froid la fraction du deuxième fluide s'écoulant dans la cavité périphérique, et étant disposée à une deuxième jonction entre le collecteur aval de fluide froid, le collecteur amont de fluide chaud et le corps d'échangeur.

De la même façon que pour la section d'entrée, on comprend que la section de sortie peut être une ouverture formée dans la jonction entre le collecteur amont de fluide chaud, le collecteur aval de fluide froid et le corps d'échangeur, permettant de mettre en communication fluidique la cavité principale du collecteur aval de fluide froid avec la cavité périphérique du collecteur amont de fluide chaud. Ainsi, la fraction du deuxième fluide introduite par la section d'entrée et s'écoulant dans la cavité périphérique, peut être réinjectée dans le collecteur aval de fluide froid par l'intermédiaire de la section de sortie. Le fait de disposer la section de sortie au niveau de cette jonction permet d'augmenter les échanges de chaleur entre le deuxième fluide et la paroi du collecteur amont de fluide chaud à cet endroit, et ainsi de limiter le risque de fissures à cette jonction.

Dans certains modes de réalisation, les collecteurs amont et aval de fluide chaud, et les collecteurs amont et aval de fluide froid ont une section rectangulaire.

Dans cette configuration, la première jonction (et la deuxième jonction) entre le collecteur amont de fluide froid (et le collecteur aval de fluide froid), le collecteur amont de fluide chaud et le corps d'échangeur est une jonction linéaire, la section d'entrée et la section de sortie s'étendant linéairement sur une partie au moins de ces jonctions.

De manière alternative, les collecteurs amont et aval de fluide chaud, et les collecteurs amont et aval de fluide froid ont une section circulaire, la première et la deuxième jonction s'étendant en arc de cercle, la section d'entrée et la section de sortie s'étendant sur un secteur angulaire compris entre 20° et 180°.

La section d'entrée et la section de sortie sont de préférence identiques. Par ailleurs, la forme des collecteurs n'est pas limitative, d'autres formes géométriques (par exemple elliptique) pouvant être envisagées.

Dans certains modes de réalisation, le collecteur amont de fluide chaud comprend des ailettes s'étendant d'une part longitudinalement selon un sens d'écoulement du premier fluide dans la cavité principale, et s'étendant d'autre part depuis l'une des deux parois de la double paroi vers l'autre des deux parois, à l'intérieur de la cavité périphérique.

On comprend que les ailettes sont des parois s'étendant verticalement par rapport à l'une des deux parois de la double paroi, en d'autres termes perpendiculairement à celle-ci, en direction de l'autre des deux parois, mais sans contact avec cette autre paroi. Les ailettes s'étendent en outre longitudinalement, c'est-à-dire d'amont en aval. On notera que ces ailettes s'étendent de préférence depuis la paroi interne de la double paroi. Ces ailettes disposées dans la cavité périphérique et étant donc immergées dans la fraction du deuxième fluide s'écoulant dans ladite cavité permettent d'améliorer les transferts thermiques en augmentant la surface d'échange avec le deuxième fluide, et ainsi de diminuer davantage la température de paroi du collecteur amont de fluide chaud.

Dans certains modes de réalisation, les ailettes s'étendent d'une part longitudinalement sur une partie d'une longueur du collecteur amont de fluide chaud, et s'étendent d'autre part sur toute la hauteur d'un espace séparant les deux parois de la double paroi.

Contrairement à la configuration précédente, les ailettes s'étendant sur toute la hauteur de l'espace séparant les deux parois de la double paroi, en étant en contact avec ces deux parois. Cette configuration permet d'améliorer encore les transferts thermiques en augmentant davantage la surface d'échange avec le deuxième fluide, et ainsi de diminuer davantage la température de paroi du collecteur amont de fluide chaud.

Dans certains modes de réalisation, une paroi du collecteur aval de fluide chaud et du collecteur aval de fluide froid comprennent une portion flexible, configurée pour permettre une déformation longitudinale du collecteur aval de fluide chaud et du collecteur aval de fluide froid. La portion flexible peut être un soufflet qui peut être allongé ou rétracté à la manière d'une portion en accordéon d'une paille, permettant ainsi d'absorber les dilatations des collecteurs.

Les portions flexibles permettent l'extension et la rétraction de l'ensemble collecteurs/corps d'échangeur. En complément des avantages obtenus par la double paroi, les portions flexibles permettent ainsi de réduire les sollicitations sur les supports de cet ensemble, et par conséquent de réduire le risque de déformation de l'ensemble.

Dans certains modes de réalisation, le collecteur amont de fluide chaud comprend une paroi intermédiaire disposée dans la cavité périphérique, et séparant la fraction du deuxième fluide prélevée dans le collecteur amont de fluide froid en un écoulement secondaire interne et un écoulement secondaire externe.

En d'autres termes, la paroi intermédiaire divise la cavité périphérique en deux cavités, dans lesquelles circulent l'écoulement secondaire interne et l'écoulement secondaire externe respectivement. De même, la fraction du deuxième fluide prélevée dans le collecteur amont de fluide froid est divisée en deux écoulements, à savoir l'écoulement secondaire interne et l'écoulement secondaire externe.

On comprend donc que l'écoulement secondaire interne a lieu entre la paroi interne séparant la cavité périphérique de la cavité principale du collecteur amont de fluide chaud, et la paroi intermédiaire. De même, l'écoulement secondaire externe a lieu entre la paroi externe séparant la cavité périphérique de l'extérieur du collecteur amont de fluide chaud, et la paroi intermédiaire. Le fait de séparer la fraction du deuxième fluide prélevée permet d'améliorer l'homogénéisation de la température des parois du collecteur amont de fluide chaud, et de mieux répartir les transferts thermiques.

Dans certains modes de réalisation, la fraction du deuxième fluide prélevé dans le collecteur amont de fluide froid est comprise entre 0,5 et 5% du débit du deuxième fluide s'écoulant dans le collecteur amont de fluide froid.

Ces valeurs permettent d'obtenir les effets mentionnés plus haut, de refroidissement de la température des parois du collecteur amont de fluide chaud, tout en limitant l'impact sur l'écoulement principal du deuxième fluide utilisé pour les transferts de chaleur avec le premier fluide dans le corps d'échangeur.

Dans certains modes de réalisation, le dispositif comprend un collecteur aval de fluide chaud fixé au corps d'échangeur, configuré pour collecter le premier fluide provenant du corps d'échangeur, comprenant une double paroi formant une cavité périphérique, et configuré pour prélever une fraction du deuxième fluide s'écoulant dans le collecteur amont de fluide froid, et pour amener ladite fraction vers le collecteur aval de fluide froid par l'intermédiaire de la cavité périphérique.

Dans cette configuration, le collecteur amont de fluide chaud et le collecteur aval de fluide chaud comprennent chacun une double paroi, et une fraction du deuxième fluide est prélevée pour s'écouler dans la cavité de chacun de ces collecteurs. De préférence, la fraction du deuxième fluide est déviée dans la cavité périphérique du colleteur aval de fluide chaud par l'intermédiaire d'une section d'entrée, et est réinjectée dans le collecteur aval de fluide froid par l'intermédiaire d'une section de sortie. Les effets techniques décrits plus haut en référence au collecteur amont de fluide chaud peuvent ainsi également être obtenus pour le collecteur aval de fluide chaud.

On notera que la fraction du deuxième fluide prélevée et déviée dans la cavité périphérique du collecteur aval de fluide chaud peut être différente de la fraction du deuxième fluide prélevée et déviée dans la cavité périphérique du collecteur amont de fluide chaud, afin d'adapter cette quantité de deuxième fluide prélevée à la température des parois du collecteur aval de fluide chaud. En effet, le collecteur aval de fluide chaud étant en aval du corps d'échangeur, le premier fluide s'écoulant dans le collecteur aval de fluide chaud, en aval du corps d'échangeur, présente une température nécessairement inférieure à sa température lors de son passage dans le collecteur amont de fluide chaud.

Dans certains modes de réalisation, le collecteur amont de fluide chaud est configuré pour prélever une fraction du premier fluide à une extrémité amont du collecteur amont de fluide chaud, et pour amener ladite fraction vers le corps d'échangeur à une extrémité aval du collecteur amont de fluide chaud par l'intermédiaire de la cavité périphérique.

Dans cette configuration, contrairement aux modes de réalisation décrits plus haut, le premier fluide s'écoule à la fois dans la cavité principale et dans la cavité périphérique, dans le même sens de circulation. En d'autres termes, le premier fluide est séparé en un écoulement principal central, et un écoulement secondaire périphérique. Cette configuration permet de faire varier la température des parois de façon plus progressive, et ainsi de réduire les gradients thermiques. En particulier, le fait d'avoir un écoulement périphérique dans la double paroi, de débit plus faible que l'écoulement principal, permet d'avoir un coefficient d'échange plus faible et donc un gradient thermique au sein des parois plus faible.

On notera que le collecteur amont de fluide froid, le collecteur aval de fluide chaud, et le collecteur aval de fluide froid peuvent être également équipés d'une double paroi similaire, permettant de séparer les écoulements respectifs en un écoulement principal central, et un écoulement secondaire périphérique.

Dans certains modes de réalisation, la double paroi comprend une paroi interne délimitant la cavité principale, et une paroi externe disposée autour de la paroi interne, un intervalle entre la paroi interne et la paroi externe étant compris entre 1 et 10 mm.

Le présent exposé concerne également une turbomachine d'aéronef comprenant un dispositif d'échangeur de chaleur selon l'un quelconque des modes de réalisation précédents.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente schématiquement une vue de face et en coupe d'un dispositif d'échange de chaleur à courants croisés selon l'art antérieur,
[Fig. 2] La figure 2 représente schématiquement une vue en perspective d'un dispositif d'échange de chaleur à courants croisés selon un premier mode de réalisation,
[Fig. 3] La figure 3 représente schématiquement une vue de face et en coupe du dispositif d'échange de chaleur de la figure 2,
[Fig. 4] La figure 4 représente schématiquement une vue de face et en coupe d'un dispositif d'échange de chaleur à courants croisés selon un deuxième mode de réalisation,
[Fig. 5] La figure 5 représente schématiquement une vue de face et en coupe d'un dispositif d'échange de chaleur à courants croisés selon un troisième mode de réalisation,
[Fig. 6] La figure 6 représente schématiquement une vue de face et en coupe d'un dispositif d'échange de chaleur à courants croisés selon un quatrième mode de réalisation,
[Fig. 7] La figure 7 représente schématiquement une vue de face et en coupe d'un dispositif d'échange de chaleur à courants croisés selon un cinquième mode de réalisation,
[Fig. 8] La figure 8 représente schématiquement une vue de face et en coupe d'un dispositif d'échange de chaleur à courants croisés selon un sixième mode de réalisation.

### Description des modes de réalisation

Dans la suite de l'exposé, les termes « amont » et « aval » sont définis par rapport au sens d'écoulement des fluides dans les différents courants du dispositif d'échangeur de chaleur, c'est-à-dire les courants « chaud » et « froid ».

On notera par ailleurs que par souci de clarté et de compréhension, les dispositifs d'échangeur de chaleur selon les différents modes de réalisation sont représentés de manière schématique, les détails de la structure réelle d'un tel dispositif, par exemple la disposition des canaux internes du corps d'échangeur 30, n'étant pas représentés.

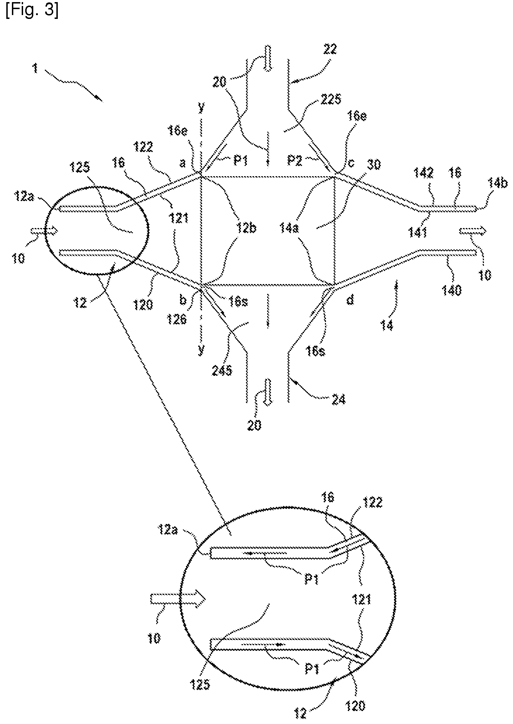

La figure 2 représente une vue en perspective d'un dispositif d'échangeur de chaleur 1 selon un premier mode de réalisation, de type à courants croisés, et la figure 3 représente schématiquement une vue de face et en coupe de ce dispositif, comprenant un premier courant 10 dit « courant chaud », et un deuxième courant 20 dit « courant froid ». Par ailleurs, selon ce mode de réalisation et également les suivants, les collecteurs 12, 14, 22, 24 sont des conduits de section rectangulaire. On notera cependant que l'invention ne se limite aux collecteurs de section rectangulaire, et s'applique également à d'autres formes, circulaires ou elliptiques par exemple.

On notera également que l'invention ne se limite pas aux dispositifs d'échangeur à courants croisés, mais s'applique également à d'autres types d'échangeurs tels que des échangeurs co-courants ou contre-courants. En outre, hormis la double paroi décrite ci-après, les autres éléments du dispositif d'échangeur 1 sont identiques au dispositif d'échangeur 1' décrit précédemment en référence à la figure 1, et ne seront pas répétés à nouveau.

Selon le présent mode de réalisation, le collecteur amont de fluide chaud 12 comprend une double paroi 120. Plus précisément, la double paroi 120 comprend une paroi interne 121, et une paroi externe 122 entourant la paroi interne 121.

La paroi interne 121 délimite une cavité principale 125 dans laquelle circule un écoulement principal d'un premier fluide, nommé « fluide chaud » dans la suite de la description, depuis l'extrémité amont 12a du collecteur amont de fluide chaud 12 jusqu'à l'extrémité aval 12b, de manière à amener ledit fluide chaud dans le corps d'échangeur 30. La paroi externe 122 est disposée autour de la paroi interne 121, en étant espacée de celle-ci, d'une distance comprise par exemple entre 1 et 10 mm. Une cavité périphérique 16, entourant la cavité principale 125, est ainsi formée entre la paroi interne 121 et la paroi externe 122 de la double paroi 120.

Par ailleurs, à l'extrémité aval 12b fixée au corps d'échangeur 30, et au niveau de la jonction linéaire « a » entre le collecteur amont de fluide chaud 12, le collecteur amont de froid 22, et le corps d'échangeur 30, le collecteur amont de fluide chaud 12 comprend une section d'entrée 16e, mettant en communication fluidique la cavité périphérique 16 avec la cavité principale 225 du collecteur amont de fluide froid 22, dans lequel circule le deuxième fluide, nommé « fluide froid » dans la suite de la description.

En outre, à l'extrémité aval 12b fixée au corps d'échangeur 30, et au niveau de la jonction linéaire « b » entre le collecteur amont de fluide chaud 12, le collecteur aval de froid 24, et le corps d'échangeur 30, le collecteur amont de fluide chaud 12 comprend une section de sortie 16s, mettant en communication fluidique la cavité périphérique 16 avec la cavité principale 245 du collecteur aval de fluide froid 24, dans lequel circule le fluide froid en aval du corps d'échangeur 30. On notera en outre que la cavité périphérique 16 est fermée à l'extrémité amont 12a du collecteur amont de fluide chaud 12.

De préférence, la section d'entrée 16e est dimensionnée de manière à ce qu'une portion P1 comprise entre 0,5 et 5% de l'écoulement principal du courant 20 de fluide froid s'écoulant dans le collecteur amont de fluide froid 22 est prélevée est collectée dans la cavité périphérique 16. Par conséquent, au cours de son écoulement dans le collecteur amont de fluide froid 22, une portion P1 (représentée par une flèche sur la figure 3) du fluide froid ne pénètre pas dans le corps d'échangeur 30, mais est déviée dans la cavité périphérique 16.

L'image agrandie en bas sur la figure 3 représente schématiquement le trajet (représenté par des flèches) de cette portion P1 du fluide froid dans la cavité périphérique 16. Bien que cette figure soit représentée en plan, et que les flèches indiquent un écoulement longitudinal du fluide froid dans la cavité périphérique 16, on comprend que le fluide froid ne s'écoule pas uniquement longitudinalement entre les extrémités 12a et 12b dans un sens puis dans l'autre, mais s'écoule aussi autour de la cavité principale 125, compte tenu de la forme de la cavité périphérique 16 visible notamment sur la figure 2, à l'extrémité du collecteur amont de fluide chaud 12. Ainsi, la portion P1 du fluide froid se diffuse dans au moins une partie de la cavité périphérique 16, et est ensuite réinjectée dans le collecteur aval de fluide froid 24, par l'intermédiaire de la section de sortie 16s.

On notera que l'écoulement de la portion P1 du fluide froid, notamment son prélèvement via la section d'entrée 16e jusqu'à sa réinjection dans le collecteur aval de fluide froid 24 via la section de sortie 16s, peut être réalisé par le jeu des différences de pressions et de températures existant entre la section d'entrée 16e et la section de sortie 16s.

Par ailleurs, dans cet exemple, le collecteur aval de fluide chaud 14 comprend également une double paroi 140, comprenant une paroi interne 141 et une paroi externe 142 formant entre elles une cavité périphérique 16. La cavité périphérique 16 est en communication fluidique avec la cavité principale 225 du collecteur amont de fluide froid 22 via une section d'entrée 16e, et avec la cavité principale 245 du collecteur aval de fluide froid 24 via une section de sortie 16s.

La section d'entrée 16e est disposée à l'extrémité amont 14a fixée au corps d'échangeur 30, au niveau de la jonction linéaire « c » entre le collecteur aval de fluide chaud 14, le collecteur amont de froid 22, et le corps d'échangeur 30, et la section de sortie 16s est disposée à l'extrémité amont 14a fixée au corps d'échangeur 30, au niveau de la jonction linéaire « d » entre le collecteur aval de fluide chaud 14, le collecteur aval de froid 24, et le corps d'échangeur 30.

Par conséquent, dans cet exemple, une portion P2 (représentée par une flèche sur la figure 3) du fluide froid, pouvant également être comprise entre 0,5 et 5% de l'écoulement principal du fluide froid, est prélevée et déviée dans la cavité périphérique 16 du collecteur aval de fluide chaud 14, de manière identique au collecteur amont de fluide chaud 12. On notera que la section d'entrée 16e et la section de sortie 16s du collecteur aval de fluide chaud 14 peuvent être identiques à la section d'entrée 16e et à la section de sortie 16s du collecteur amont de fluide chaud 12, ou différentes de celle-ci.

Dans un exemple d'application du dispositif d'échangeur de chaleur 1, un fluide chaud, notamment les gaz chauds en sortie turbine basse pression, a une température de 1000°C peut être collecté en entréedu courant chaud 10, et un fluide froid, s'écoulant par exemple dans la veine d'écoulement d'air secondaire, a une température de 100°C peut être collecté en ertrée du courant froid 20. Dans ce cas, les doubles parois 120, 140 des collecteurs de fluide chaud permettent de baisser la température moyenne de leurs parois de l'ordre de 300 à 500°C, cette plage dépendant des propriétés d'échanges thermiques de chacun des deux fluides (chaud et froid) qui sont en contact avec les parois. Ainsi, les parois des collecteurs de fluide chaud sont soumises à une plage de variation de températures plus réduite durant un fonctionnement donné du moteur de la turbomachine du fait de la réduction de la température de paroi des collecteurs de fluides chauds 12, 14.

En particulier, en l'absence de double paroi, les collecteurs de fluide chaud peuvent subir une variation de température comprise entre 20°C (température ambiante avant le démarrage du moteur) et 1000°C (température atteinte pendant le fonctionnement du moteur). En présence de doubles parois, cette plage peut être réduite à l'intervalle [20°C- 500°C], en supposant une baisse de température maximale de la paroi interne 121, 141 de 500°C grâce aux échanges thermiques avec le fluide froid dans la cavité périphérique 16. Cela permet ainsi de réduire les sollicitations thermiques dans les collecteurs de fluide chaud et notamment dans les zones des jonctions a, b, c et d les plus sensibles, de diminuer le risque de déformation des collecteurs et de fuite au niveau de ces jonctions.

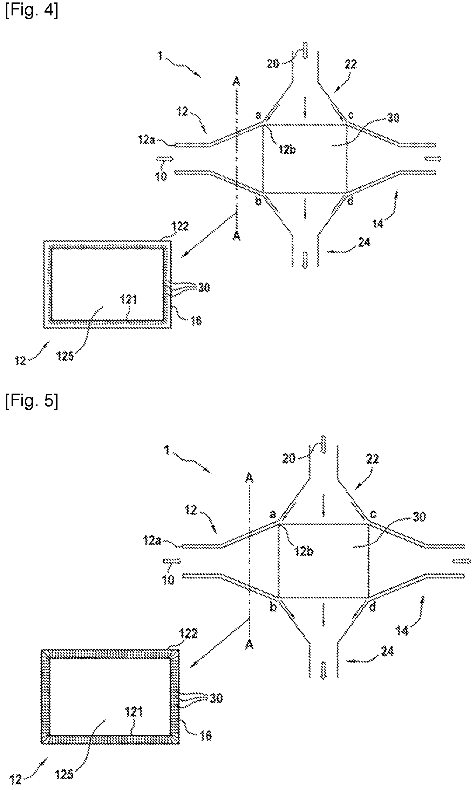

La figure 4 représente schématiquement un dispositif d'échangeur de chaleur 1 selon un deuxième mode de réalisation. Ce dispositif d'échangeur de chaleur 1 diffère du dispositif d'échangeur de chaleur selon le premier mode de réalisation en ce que le collecteur amont de fluide chaud 12 comprend une pluralité d'ailettes 30 disposée dans la cavité périphérique 16.

Comme illustré sur l'image en bas à gauche de la figure 4, représentant une section du collecteur amont de fluide chaud 12 dans un plan de coupe A-A, les ailettes 30 sont des parois s'étendant verticalement depuis et par rapport à la paroi interne 121, par exemple, en d'autres termes perpendiculairement à celle-ci, en direction de la paroi externe 122, mais sans contact avec celle-ci. Les ailettes 30 s'étendent en outre longitudinalement, c'est-à-dire d'amont en aval, entre l'extrémité amont 12a et l'extrémité aval 12b, sur au moins une partie de la longueur du collecteur amont de fluide chaud 12. Les ailettes 30 sont réparties de préférence à intervalles réguliers autour d'un axe central du collecteur.

Ces ailettes 30 sont disposées dans la cavité périphérique 16 en étant immergées dans la fraction du fluide froid s'écoulant dans ladite cavité, augmentant la surface d'échange avec le fluide froid et donc les transferts thermiques. On notera que le collecteur aval de fluide chaud 14, comprenant dans cet exemple une double paroi 140, peut également comprendre des ailettes 30 similaires dans sa cavité périphérique.

La figure 5 représente schématiquement un dispositif d'échangeur de chaleur 1 selon un troisième mode de réalisation. Comme illustré sur l'image en bas à gauche de la figure 5, représentant une section du collecteur amont de fluide chaud 12 dans un plan de coupe A-A, ce dispositif d'échangeur de chaleur 1 diffère du dispositif d'échangeur de chaleur selon le deuxième mode de réalisation en ce que les ailettes 30 s'étendent sur toute la hauteur de l'espace séparant la paroi interne 121 et la paroi externe 122.

Dans cette configuration, les ailettes 30 s'étendent longitudinalement sur une partie seulement de la longueur du collecteur amont de fluide chaud 12 entre l'extrémité amont 12a et l'extrémité aval 12b, et non sur toute la longueur de celui-ci, afin de permettre à la fraction du fluide froid prélevée par l'intermédiaire de la section d'entrée 16e, de s'écouler dans la cavité périphérique 16 et jusqu'à la section de sortie 16s.

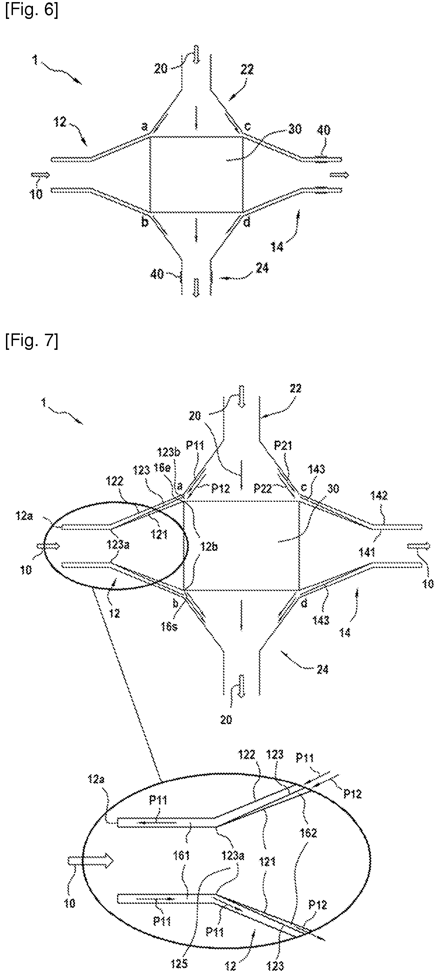

La figure 6 représente schématiquement un dispositif d'échangeur de chaleur 1 selon un quatrième mode de réalisation. Ce dispositif d'échangeur de chaleur 1 diffère du dispositif d'échangeur de chaleur selon le premier mode de réalisation en ce que le collecteur aval de fluide chaud 14 et le collecteur aval de fluide froid 24 comprennent des portions flexibles 40. Dans cet exemple les portions flexibles 40 sont des soufflets disposés sur une section des collecteurs 14, 24, et permettant une déformation longitudinale de ces derniers en s'allongeant ou en se rétractant de manière à absorber les dilatations des collecteurs.

La figure 7 représente schématiquement un dispositif d'échangeur de chaleur 1 selon un cinquième mode de réalisation. Ce dispositif d'échangeur de chaleur 1 diffère du dispositif d'échangeur de chaleur selon le premier mode de réalisation en ce que le collecteur amont de fluide chaud 12 comprend une paroi intermédiaire 123 disposée dans la cavité périphérique 16, et séparant la fraction du fluide froid prélevée dans le collecteur amont de fluide froid 22 en deux fractions P11 et P12, résultant en un écoulement secondaire externe et un écoulement secondaire interne dans la cavité périphérique 16.

Plus précisément, la paroi intermédiaire 123 divise la cavité périphérique 16 en une cavité périphérique externe 161 dans laquelle circule l'écoulement secondaire externe, c'est-à-dire la portion de fluide froid P11, et une cavité périphérique interne 162 dans laquelle circule l'écoulement secondaire interne, c'est-à-dire la portion de fluide froid P12. Pour ce faire, la paroi intermédiaire 123 s'étend autour de la paroi interne 121 et transversalement à celle-ci de manière à refermer la cavité périphérique interne 162 à une de ses extrémités. En d'autres termes, l'extrémité 123b de la paroi intermédiaire 123 du côté de l'extrémité aval 12b du collecteur 12 est disposée entre la paroi interne 121 et la paroi externe 122 de manière à diviser la section d'entrée 16e et la section de sortie 16s en deux, et l'extrémité 123a de la paroi intermédiaire 123 plus proche de l'extrémité amont 12a du collecteur 12 est en contact avec la paroi interne 121 en étant fixée à celle-ci, de manière à refermer la cavité périphérique interne 162 à cette extrémité 123a.

Dans cet exemple, le collecteur aval de fluide chaud 14 comprend également une paroi intermédiaire 143 similaire à la paroi intermédiaire 123, disposée entre la paroi interne 141 et la paroi externe 142, et séparant la fraction P2 de fluide froid prélevée en deux portion P21 et P22.

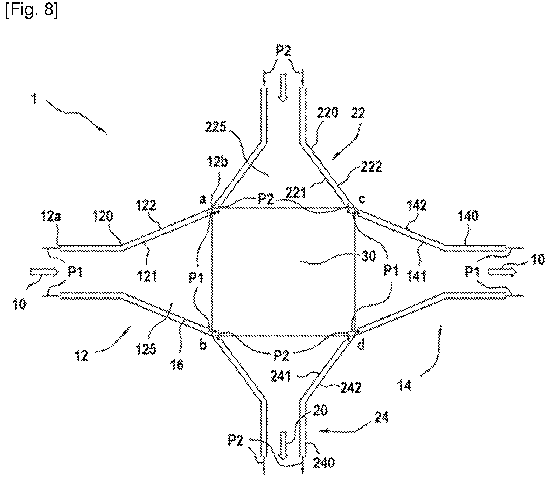

La figure 8 représente schématiquement un dispositif d'échangeur de chaleur 1 selon un sixième mode de réalisation. Dans ce mode de réalisation, contrairement aux précédents modes de réalisation, la cavité périphérique 16 n'est pas fermée à l'extrémité amont 12a du collecteur amont de fluide chaud 12, mais ouverte. Par ailleurs, à l'extrémité aval 12b, la cavité périphérique 16 ne débouche pas dans la cavité principale 225 du collecteur amont de fluide froid 22, mais débouche dans la cavité principale 125 du collecteur amont de fluide chaud 12, en vis-à-vis du corps d'échangeur 30. Ainsi, selon ce mode de réalisation, une portion P1 du courant chaud principal 10 est déviée dans la cavité périphérique 16 au niveau de l'extrémité amont 12a, et s'écoule le long de la cavité périphérique 16, dans le même sens de circulation que l'écoulement principal dans la cavité principale 125, jusqu'à l'extrémité aval 12b.

Cette portion P1 du courant chaud principal 10 s'écoule ensuite dans le corps d'échangeur 30. Dans cet exemple, le collecteur aval de fluide chaud 14 comprend également une double paroi 140 similaire à la double paroi 120 du collecteur amont de fluide chaud 12, comprenant notamment une paroi interne 141 et une paroi externe 142. Une portion P1 du courant chaud principal 10 sortant du corps d'échangeur 30 peut ainsi être déviée dans la double paroi 140 du collecteur aval de fluide chaud 14.

Dans cet exemple également, le collecteur amont de fluide froid 22 comprend une double paroi 220 ayant une paroi interne 221 et une paroi externe 222, et le collecteur aval de fluide froid 24 comprend une double paroi 240 ayant une paroi interne 241 et une paroi externe 242. Ainsi, de la même façon que pour les doubles parois des collecteurs amont et aval de fluide chaud, une portion P2 du courant froid principal 20 peut être prélevée à l'extrémité amont du collecteur amont de fluide froid 22, s'écouler le long de la cavité périphérique de celui-ci jusqu'au corps d'échangeur 30, puis être réinjectée dans la cavité périphérique du collecteur aval de fluide froid 24.

On notera que contrairement aux précédents modes de réalisation dans lesquelles les collecteurs équipés d'une double paroi sont fixés au corps d'échangeur 30 par l'intermédiaire de leur paroi interne 121, 141, les collecteurs du dispositif d'échangeur de chaleur 1 selon le sixième mode de réalisation sont fixés au corps d'échangeur 30 par l'intermédiaire de leur paroi externe 122, 142, 222, 242. Ainsi, alors que dans les modes de réalisation précédents, la cavité périphérique 16 du collecteur amont de fluide chaud 12 débouche dans la cavité principale 225 du collecteur amont de fluide froid 22, la cavité périphérique 16 du collecteur amont de fluide chaud 12 selon le sixième mode de réalisation débouche sur le corps d'échangeur 30.

On notera en outre que dans les différents modes de réalisation un à six précédemment décrits, le corps d'échangeur 30 et les différents collecteurs que comporte le dispositif d'échangeur de chaleur 1 peuvent être des pièces distinctes assemblées et fixées entre elles par soudure ou par brasage par exemple, ou être fabriquées de manière monobloc, par fabrication additive par exemple.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif (1) d'échangeur de chaleur pour turbomachine d'aéronef, comprenant un corps d'échangeur (30), un collecteur amont de fluide chaud (12) fixé au corps d'échangeur (30) et configuré pour collecter un premier fluide à une première température et pour l'amener vers le corps d'échangeur (30), un collecteur amont de fluide froid (22) fixé au corps d'échangeur (30) et configuré pour collecter un deuxième fluide à une deuxième température inférieure à la première température et pour l'amener vers le corps d'échangeur (30), le collecteur amont de fluide chaud (12) au moins comprenant une double paroi (120) formant une cavité périphérique (16) entourant une cavité principale (125) configurée pour recevoir un écoulement principale du premier fluide, **caractérisé en ce que** la cavité périphérique (16) est configurée pour recevoir un écoulement secondaire formé par une fraction du premier fluide ou du deuxième fluide.

2. Dispositif (1) selon la revendication 1, comprenant un collecteur aval de fluide froid (24) fixé au corps d'échangeur (30) et configuré pour collecter le deuxième fluide provenant du corps d'échangeur (30), la fraction étant une fraction du deuxième fluide s'écoulant dans le collecteur amont de fluide froid (22), le collecteur amont de fluide chaud (12) étant configuré pour prélever ladite fraction du deuxième fluide, et pour amener ladite fraction vers le collecteur aval de fluide froid (24) par l'intermédiaire de la cavité périphérique (16).

3. Dispositif (1) selon la revendication 2, dans lequel la cavité périphérique (16) comprend au moins une section d'entrée (16e) débouchant dans une cavité principale (225) du collecteur amont de fluide froid (22), la section d'entrée (16e) étant configurée pour prélever la fraction du deuxième fluide et étant disposée à une première jonction (a) entre le collecteur amont de fluide froid (22), le collecteur amont de fluide chaud (12) et le corps d'échangeur (30).

4. Dispositif (1) selon la revendication 2 ou 3, dans lequel la cavité périphérique (16) comprend au moins une section de sortie (16s) débouchant dans une cavité principale (245) du collecteur aval de fluide froid (24), la section de sortie (16s) étant configurée pour injecter dans le collecteur aval de fluide froid (24) la fraction du deuxième fluide s'écoulant dans la cavité périphérique (16), et étant disposée à une deuxième jonction (b) entre le collecteur aval de fluide froid (24), le collecteur amont de fluide chaud (12) et le corps d'échangeur (30).

5. Dispositif (1) selon l'une quelconque des revendications 1 à 4, dans lequel le collecteur amont de fluide chaud (12) comprend des ailettes (30) s'étendant d'une part longitudinalement selon un sens d'écoulement du premier fluide dans la cavité principale (125), et s'étendant d'autre part depuis l'une des deux parois de la double paroi (120) vers l'autre des deux parois, à l'intérieur de la cavité périphérique (16).

6. Dispositif (1) selon la revendication 5, dans lequel les ailettes (30) s'étendent d'une part longitudinalement sur une partie d'une longueur du collecteur amont de fluide chaud (12), et s'étendent d'autre part sur toute la hauteur d'un espace séparant les deux parois (121, 122) de la double paroi (120).

7. Dispositif (1) selon l'une quelconque des revendications 1 à 4, dans lequel le collecteur amont de fluide chaud (12) comprend une paroi intermédiaire (123) disposée dans la cavité périphérique (16), et séparant la fraction du deuxième fluide prélevée dans le collecteur amont de fluide froid (22) en un écoulement secondaire interne (162) et un écoulement secondaire externe (161).

8. Dispositif (1) selon l'une quelconque des revendications 1 à 7, dans lequel la fraction du deuxième fluide prélevé dans le collecteur amont de fluide froid (22) est comprise entre 0,5 et 5% du débit du deuxième fluide s'écoulant dans le collecteur amont de fluide froid (22).

9. Dispositif (1) selon l'une quelconque des revendications 1 à 8, comprenant un collecteur aval de fluide chaud (14) fixé au corps d'échangeur (30), configuré pour collecter le premier fluide provenant du corps d'échangeur (30), comprenant une double paroi (140) formant une cavité périphérique (16), et configuré pour prélever une fraction du deuxième fluide s'écoulant dans le collecteur amont de fluide froid (22), et pour amener ladite fraction vers le collecteur aval de fluide froid (24) par l'intermédiaire de ladite cavité périphérique (16).

10. Dispositif (1) selon la revendication 1, dans lequel la fraction est une fraction du premier fluide, le collecteur amont de fluide chaud (12) étant configuré pour prélever ladite fraction du premier fluide à une extrémité amont (12a) du collecteur amont de fluide chaud (12), et pour amener ladite fraction vers le corps d'échangeur (30) à une extrémité aval (12b) du collecteur amont de fluide chaud (12) par l'intermédiaire de la cavité périphérique (16).

11. Dispositif (1) selon l'une quelconque des revendications 1 à 10, dans lequel la double paroi (120) comprend une paroi interne (121) délimitant la cavité principale (125), et une paroi externe (122) disposée autour de la paroi interne (121), un intervalle entre la paroi interne (121) et la paroi externe (122) étant compris entre 1 et 10 mm.

12. Turbomachine d'aéronef comprenant un dispositif d'échangeur de chaleur (1) selon l'une quelconque des revendications précédentes.

## Patentansprüche

1. Wärmetauscher-Vorrichtung (1) für eine Turbomaschine für ein Luftfahrzeug, umfassend einen Wärmetauscherkörper (30), einen stromaufwärtigen Sammler für heißes Fluid (12), der an dem Wärmetauscherkörper (30) befestigt und dazu ausgestaltet ist, ein erstes Fluid mit einer ersten Temperatur zu sammeln und es zu dem Wärmetauscherkörper (30) hinzuführen, einen stromaufwärtigen Sammler für kaltes Fluid (22), der an dem Wärmetauscherkörper (30) befestigt und dazu ausgestaltet ist, ein zweites Fluid mit einer zweiten Temperatur, die niedriger ist als die erste Temperatur, zu sammeln und es zu dem Wärmetauscherkörper (30) hinzuführen, wobei der stromaufwärtige Sammler für heißes Fluid (12) zumindest eine doppelte Wand (120) umfasst, die einen umlaufenden Hohlraum (16) bildet, der einen Haupthohlraum (125) umgibt, der dazu ausgestaltet ist, eine Hauptströmung des ersten Fluids aufzunehmen, **dadurch gekennzeichnet, dass** der umlaufende Hohlraum (16) dazu ausgestaltet ist, einen sekundären Strom aufzunehmen, der durch einen Anteil des ersten Fluids oder des zweiten Fluids gebildet wird.

2. Vorrichtung (1) nach Anspruch 1, umfassend einen stromabwärtigen Sammler für kaltes Fluid (24), der an dem Wärmetauscherkörper (30) befestigt und dazu ausgestaltet ist, das zweite Fluid, das von dem Wärmetauscherkörper (30) kommt, zu sammeln, wobei der Anteil ein Anteil des zweiten Fluids ist, das in dem stromaufwärtigen Sammler für kaltes Fluid (22) strömt, wobei der stromaufwärtige Sammler für heißes Fluid (12) dazu ausgestaltet ist, den Anteil des zweiten Fluids zu entnehmen und den Anteil mittels des umlaufenden Hohlraums (16) zu dem stromabwärtigen Sammler für kaltes Fluid (24) hinzuführen.

3. Vorrichtung (1) nach Anspruch 2, wobei der umlaufende Hohlraum (16) zumindest einen Eingangsabschnitt (16e) umfasst, der in einen Haupthohlraum (225) des stromaufwärtigen Sammler für kaltes Fluid (22) mündet, wobei der Eingangsabschnitt (16e) dazu ausgestaltet ist, den Anteil des zweiten Fluids zu entnehmen, und an einer ersten Verbindung (a) zwischen dem stromaufwärtigen Sammler für kaltes Fluid (22), dem stromaufwärtigen Sammler für heißes Fluid (12) und dem Wärmetauscherkörper (30) angeordnet ist.

4. Vorrichtung (1) nach Anspruch 2 oder 3, wobei der umlaufende Hohlraum (16) zumindest einen Ausgangsabschnitt (16s) umfasst, der in einen Haupthohlraum (245) des stromabwärtigen Sammlers für kaltes Fluid (24) mündet, wobei der Ausgangsabschnitt (16s) dazu ausgestaltet ist, den Anteil des zweiten Fluids, das in dem umlaufenden Hohlraum (16) strömt, in den stromabwärtigen Sammler für kaltes Fluid (24) einzuleiten, und an einer zweiten Verbindung (b) zwischen dem stromabwärtigen Sammler für kaltes Fluid (24), dem stromaufwärtigen Sammler für heißes Fluid (12) und dem Wärmetauscherkörper (30) angeordnet ist.

5. Vorrichtung (1) nach einem der Ansprüche 1 bis 4, wobei der stromaufwärtige Sammler für heißes Fluid (12) Lamellen (30) umfasst, die sich einerseits der Länge nach gemäß einer Strömungsrichtung des ersten Fluids in dem Haupthohlraum (125) erstrecken, und sich andererseits von einer der zwei Wände der doppelten Wand (120) zu der anderen der zwei Wände im Inneren des umlaufenden Hohlraums (16) erstrecken.

6. Vorrichtung (1) nach Anspruch 5, wobei die Lamellen (30) sich einerseits der Länge nach über einen Teil einer Länge des stromaufwärtigen Sammlers für heißes Fluid (12) erstrecken, und sich andererseits über die gesamte Höhe eines Raums erstrecken, der die zwei Wände (121, 122) der doppelten Wand (120) voneinander trennt.

7. Vorrichtung (1) nach einem der Ansprüche 1 bis 4, wobei der stromaufwärtige Sammler für heißes Fluid (12) eine Zwischenwand (123) umfasst, die in dem umlaufenden Hohlraum (16) angeordnet ist und den Anteil des zweiten Fluids, der in dem stromaufwärtigen Sammler für kaltes Fluid (22) entnommen wird, in einen inneren sekundären Strom (162) und einen äußeren sekundären Strom (161) trennt.

8. Vorrichtung (1) nach einem der Ansprüche 1 bis 7, wobei der Anteil des zweiten Fluids, das in dem stromaufwärtigen Sammler für kaltes Fluid (22) entnommen wird, aus zwischen 0,5 und 5 % des Durchsatzes des zweiten Fluids besteht, das in dem stromaufwärtigen Sammler für kaltes Fluid (22) strömt.

9. Vorrichtung (1) nach einem der Ansprüche 1 bis 8, umfassend einen stromabwärtigen Sammler für heißes Fluid (14), der an dem Wärmetauscherkörper (30) befestigt ist, dazu ausgestaltet ist, das erste Fluid, das von dem Wärmetauscherkörper (30) kommt zu sammeln, eine doppelte Wand (140) umfasst, die einen umlaufenden Hohlraum (16) bildet, und dazu ausgestaltet ist, einen Anteil des zweiten Fluids, das in dem stromaufwärtigen Sammler für kaltes Fluid (22) strömt, zu entnehmen und den Anteil mittels des umlaufenden Hohlraums (16) zu dem stromabwärtigen Sammler für kaltes Fluid (24) hinzuführen.

10. Vorrichtung (1) nach Anspruch 1, wobei der Anteil ein Anteil des ersten Fluids ist, wobei der stromaufwärtige Sammler für heißes Fluid (12) dazu ausgestaltet ist, den Anteil des ersten Fluids an einem stromaufwärtigen Ende (12a) des stromaufwärtigen Sammlers für heißes Fluid (12) zu entnehmen, und den Anteil mittels des umlaufenden Hohlraums (16) zu dem Wärmetauscherkörper (30) an einem stromabwärtigen Ende (12b) des stromaufwärtigen Sammlers für heißes Fluid (12) hinzuführen.

11. Vorrichtung (1) nach einem der Ansprüche 1 bis 10, wobei die doppelte Wand (120) eine innere Wand (121), die den Haupthohlraum (125) begrenzt, und eine äußere Wand (122) umfasst, die um die innere Wand (121) herum angeordnet ist, wobei ein Intervall zwischen der inneren Wand (121) und der äußeren Wand (122) zwischen 1 und 10 mm beträgt.

12. Turbomaschine für ein Luftfahrzeug, umfassend eine Wärmetauscher-Vorrichtung (1) nach einem der vorhergehenden Ansprüche.

## Claims

1. A heat exchanger device (1) for aircraft turbomachine, comprising a heat exchanger body (30), an upstream hot-fluid header (12) attached to the heat exchanger body (30) and configured to collect a first fluid at a first temperature and to feed it to the heat exchanger body (30), an upstream cold-fluid header (22) attached to the heat exchanger body (30) and configured to collect a second fluid at a second temperature lower than the first temperature and to feed it to the heat exchanger body (30), at least the upstream hot-fluid header (12) comprising a double wall (120) forming a peripheral cavity (16) surrounding a main cavity (125) configured to receive a main flow of the first fluid, **characterized in that** the peripheral cavity (16) is configured to receive a secondary flow formed by a fraction of the first fluid or of the second fluid.

2. The device (1) according to claim 1, comprising a downstream cold-fluid header (24) attached to the heat exchanger body (30) and configured to collect the second fluid flowing from the heat exchanger body (30), the fraction being a fraction of the second fluid flowing into the upstream cold-fluid header (22), the upstream hot-fluid header (12) being configured to collect said fraction of the second fluid, and to feed said fraction to the downstream cold-fluid header (24) by means of the peripheral cavity (16).

3. The device (1) according to claim 2, wherein the peripheral cavity (16) comprises at least one inlet section (16e) opening in a main cavity (225) of the upstream cold-fluid header (22), the inlet section (16e) being configured to collect the fraction of the second fluid and being arranged at a first junction (a) between the upstream cold-fluid header (22), the upstream hot-fluid header (12) and the heat exchanger body (30).

4. The device (1) according to claim 2 or 3, wherein the peripheral cavity (16) comprises at least one outlet section (16s) opening in a main cavity (245) of the downstream cold-fluid header (24), the outlet section (16s) being configured to inject the fraction of the second fluid flowing into the peripheral cavity (16) into the downstream cold-fluid header (24), and being arranged at a second junction (b) between the downstream cold-fluid header (24), the upstream hot-fluid header (12) and the heat exchanger body (30).

5. The device (1) according to any one of claims 1 to 4, wherein the upstream hot-fluid header (12) comprises fins (30) extending on the one hand longitudinally in a direction of flow of the first fluid in the main cavity (125), and extending on the other hand from one of the two walls of the double wall (120) to the other of the two walls, inside the peripheral cavity (16).

6. The device (1) according to claim 5, wherein the fins (30) extend on the one hand longitudinally over a portion of a length of the upstream hot-fluid header (12), and extend on the other hand over the entire height of a space separating the two walls (121, 122) of the double wall (120).

7. The device (1) according to any one of claims 1 to 4, wherein the upstream hot-fluid header (12) comprises an intermediate wall (123) arranged in the peripheral cavity (16), and separating the fraction of the second fluid collected in the upstream cold-fluid header (22) into a secondary internal flow (162) and a secondary external flow (161).

8. The device (1) according to any one of claims 1 to 7, wherein the fraction of the second fluid collected in the upstream cold-fluid header (22) is between 0.5 and 5% of the flow rate of the second fluid flowing into the upstream cold-fluid header (22).

9. The device (1) according to any one of claims 1 to 8, comprising a downstream hot-fluid header (14) attached to the heat exchanger body (30), configured to collect the first fluid flowing from the heat exchanger body (30), comprising a double wall (140) forming a peripheral cavity (16), and configured to collect a fraction of the second fluid flowing into the upstream cold-fluid header (22), and to feed said fraction to the downstream cold-fluid header (24) by means of said peripheral cavity (16).

10. The device (1) according to claim 1, wherein the fraction is a fraction of the first fluid, the upstream hot-fluid header (12) being configured to collect said fraction of the first fluid at an upstream end (12a) of the upstream hot-fluid header (12), and to feed said fraction to the heat exchanger body (30) at a downstream end (12b) of the upstream hot-fluid header (12) by means of the peripheral cavity (16).

11. The device (1) according to any one of claims 1 to 10, wherein the double wall (120) comprises an internal wall (121) delimiting the main cavity (125), and an external wall (122) arranged around the internal wall (121), a gap between the internal wall (121) and the external wall (122) being between 1 and 10 mm.

12. An aircraft turbomachine comprising a heat exchanger device (1) according to any one of the preceding claims.
